# EUROPÄISCHE PATENTSCHRIFT

(11) **EP 2 619 276 B1**
(45) Veröffentlichungstag und Bekanntmachung des Hinweises auf die Patenterteilung: **02.11.2022**
(21) Anmeldenummer: 11808143.9
(22) Anmeldetag: 21.09.2011
(51) Int. Cl.: C09D 183/06

(54) **PIGMENTIERTE ZWEIKOMPONENTEN-SCHUTZBESCHICHTUNG**
TWO-COMPONENT PIGMENTED PROTECTIVE COATING
REVÊTEMENT DE PROTECTION PIGMENTÉ À DEUX COMPOSANTS

(30) Priorität: 21.09.2010 DE 102010046281
(43) Veröffentlichungstag der Anmeldung: 31.07.2013
(73) Patentinhaber: NTC Nano Tech Coatings GmbH, 66636 Tholey (DE)
(72) Erfinder: WAGNER, Georg, 66636 Theley (DE)
(74) Vertreter: Pietruk, Claus Peter
(86) Internationale Anmeldenummer: PCT/DE2011/001752
(87) Internationale Veröffentlichungsnummer: WO 2012/041280

(56) Entgegenhaltungen:
- DE-A1-102005 026 523
- US-A1- 2009 281 207

## Beschreibung

Die Erfindung betrifft das oberbegrifflich Beanspruchte und befasst sich demgemäß mit Zweikomponenten-Schutzbeschichtungen, die pigmentiert sind.

Schutzbeschichtungen sind bekannt. Sie dienen dazu, einen mit der Beschichtung versehenen Untergrund vor verschiedenen Einflüssen zu schützen. So kann beispielsweise einem korrosiven Angriff vorgebeugt werden oder ein Schutz vor dauerhafter Verschmutzung durch Ermöglichung einer einfacheren Reinigung ermöglicht werden. Zugleich soll die Beschichtung im Regelfall ein ansprechendes Aussehen der beschichteten Fläche gewährleisten. Es sei erwähnt, dass vorliegend Schutzbeschichtungen auch als Schutzlack bezeichnet werden und insofern beide Begriffe gleichbedeutend verwendbar sind.

Um diese Eigenschaften zu erreichen, ist es schon vorgeschlagen worden, Schutzbeschichtungen mit Pigmenten zu versehen, zum Beispiel um die Farbe der Schutzbeschichtung zu bestimmen.

Es kann aber nicht jede Schutzbeschichtung auf jedem Untergrund aufgebracht werden; überdies sind oftmals bestimmte Eigenschaften hinsichtlich der Verarbeitung wünschenswert, wie gute Auftragbarkeit, hinreichend lange Haltbarkeit bis zur Verarbeitung, bestimmte Dauern zwischen Auftrag und Aushärtung usw. Zudem ist es häufig schon aus Kosten- und Umweltschutzgründen wünschenswert, bestimmte Ausgangsstoffe einsetzen zu können und den Einsatz anderer zumindest weitgehend zu vermeiden.

In der DE 19 935 471 A1 wurde zur Herstellung von transparenten Beschichtungsstoffen für Polymeroberflächen die Synthese von Epoxy-Siloxanen durch Mischprozesse von Polysiloxanen mit Epoxidharzen beschrieben, wobei die beschriebene Zusammensetzung lösungsmittelarm sein soll und ohne Füllstoffe auskommen soll.

In der DE 10 2005 026 523 A1 wurde ein Verfahren zur Herstellung von Korrosionsschutzbeschichtungen Zink und Aluminium als aktiven Pigmenten beschrieben.

In der in US 2009 0 281 207 werden photokatalytische Schichten auf Basis von Epoxy-Siloxanen unter Mitverwendung von Anatas-Partikeln beschreiben.

Zur Verkapselung von Elektronikbauteilen sollen nach DE 603 16 759 T2 organische Epoxidharze mit Siliconharzen kombiniert werden.

Auch für mineralische Untergründe sind Schutzschichten seit langem bekannt. So werden etwa Sandsteingewänder an alten Häusern oftmals gestrichen, um sie vor Witterung zu schützen; auch auf andere mineralische Untergründe wie zum Beispiel Beton wurden bereits Schutzbeschichtungen aufgetragen, etwa um einen Graffitischutz zu erzielen usw.

Das Maß, in welchem angestrebte Eigenschaften wie Haltbarkeit, gute Verarbeitbarkeit, Haftung auf dem Untergrund, geringe Kosten usw. erzielt werden können, ist oftmals nicht vollständig befriedigend. Dies gilt insbesondere für problematische Untergründe in problematischen Umgebungen, wie etwa die Beschichtung von Beton in Tunneln.

Bei Betonbeschichtungen wird nach dem Stand der Technik in einem ersten Schritt eine Vorbehandlung der Betonoberfläche mit wässrigen Acrylatlösungen (Tiefengrund) vorgenommen. Diese haben die Funktion eines Haftvermittlers zwischen dem mineralischen Untergrund und den in der Regel auf organischen Polymeren basierenden weiteren Beschichtungen.

Die zweite und dritte Schicht bilden dann weiß pigmentierte, zweikomponentige wässrige Beschichtungsstoffe auf der Basis Epoxidharz + Aminhärter.

Diese beiden Schichten, die im Übrigen mehrfach aufgetragen werden müssen, um ausreichende Schichtdicke und Deckkraft zu erzielen, haben den Zweck, neben der Farbgebung einerseits die Wasserdampfdiffusion aus dem Beton nach außen zu ermöglichen (atmungsaktiv); andererseits soll eine ausreichende Diffusionsbarriere gegen den Durchtritt von Kohlendioxid zum Beton weitgehend verhindert werden, da der Beton sonst durch Carbonatisierung mit der Zeit zersetzt wird.

Wenn eine bessere Reinigungswirkung erzielt werden soll, wird als vierte Schicht eine hydrophob eingestellte Polyurethan-Klarlackschicht aufgetragen. Die Reinigung derartiger hydrophober Schichten erfordert allerdings den Einsatz von Hochdruckreinigern und den Einsatz von Reinigungssubstanzen, die Tenside enthalten.

Wünschenswert ist aber, dass bereits der einfache Einsatz von Wasser zu einem sehr guten Reinigungsverhalten führt. Die konventionellen Schichten gewährleisten dies nicht. So ergibt eine Polyurethanschicht nach Reinigung eher den Eindruck; als ob .der Dreck nur gleichmäßig verteilt und verschmiert wurde.

Bereits angeboten wurde ein Einschichtbeschichtungsstoff der Anmelderin. Dieser stellt einen 2K-Polysiloxan-Polyether-Einschichtbeschichtungsstoff dar, der ausweislich öffentlich verfügbarer Informationen ein Sol-Gel basierter Beschichtungsstoff mit folgenden Eigenschaften ist: geringe Trockenschichtdicke, sehr leicht zu reinigende Oberflächen, mechanisch widerstandsfähige Einschichtbeschichtung mit guter Haftung, Härtung auch bei niedrigen Temperaturen, sehr gute Haftung auch auf mineralischen Untergründen, gute Kohlendioxid - Dichtigkeit (SD-Wert Kohlendioxid > 66 m), gute Wasserdampf-Diffusionsfähigkeit (SD - Wert: Wasserdampf < 4 m). Er soll ausweislich der öffentlich verfügbaren Informationen auch sehr gute Glanzhaltung und Witterungsbeständigkeit, sehr gute Beständigkeit gegen saure und alkalische Angriffe und sehr gute Wasser- und Lösungsmittelbeständigkeit bieten. Verschmutzte Oberflächen sollen leicht mit Wasser gereinigt werden können. Dampfstrahlreinigung mit der damit verbundenen Kontaminationsgefahr durch aerosolförmige Verunreinigungen und Mikroorganismen sei nicht erforderlich.

Er soll zweikomponentig geliefert werden, und zwar in weiß, wobei weitere Farbtöne anfragbar waren, und ergibt ein seidenglänzendes Aussehen.

Weiter ist von der Anmelderin auch bekannt ein Polysiloxan-Polyether-Harz mit einem Festkörpergewicht > 95 % und einer Dichte von ca. 1,5 g/cm³ (Mischung), bei einer Ergiebigkeit von ca. 3 bis 5 m²/kg bei 60 µm Trockenschichtdicke. Der praktische Verbrauch wird als abhängig von der Oberflächenrauhigkeit und vom Applikationsverfahren angegeben, die Temperaturbeständigkeit soll von -20 °C bis +150 °C reichen. Die Lagerfähigkeit soll mindestens 6 Monate bei kühler, trockner Lagerung in verschlossenen Originalgebinden betragen. Die Verarbeitung soll sich nach dem zu beschichtenden Material richten. Die Vorbereitung sieht aber vor, dass Oberflächen auf jeden Fall schmutz- und fettfrei und tragfähig sein müssen. Als Mischungsverhältnis wird angegeben Stamm zu Härter = 6,0 : 1 mit Härter H02. Es sollen möglich sein Luftspritzen, Pinselauftrag, Rollen und es wird angegeben, dass mit Alkoholen, Ketonen und Glykolethern verdünnbar ist. Bei stark saugenden Untergründen soll ein Voranstrich mit verdünntem Material empfehlenswert sein (ca. 8 % - 10 %). Zur Trocknung wird Härtung bei Raumtemperatur angegeben, die Topfzeit mit vier Stunden (25 °C), die Trocknung (25 °C) mit fünf Stunden (staubtrocken) und die Durchtrocknung (25 °C) mit 24 Stunden. Als Sollschichtdicke angegeben wird ca. 60 bis 100 µm nach Härtung. Die angegebenen Werte sollen Richtwerte sein und nicht die Bedeutung einer rechtlichen Zusicherung bestimmter Eigenschaften der Produkte besitzen. Die zitierte Produktinformation ist demnach als unverbindlich anzusehen.

Über Produkte der Anmelderin wurde auch berichtet, dass ein erstes Produkt zur Serienreife gebracht wurde, welches aufgrund seiner herausragenden Eigenschaften herkömmliche Tunnelbeschichtungen (zum Beispiel 2-K-Epoxi-Dispersionen) ersetzen soll. Das Produkt wird als 2K-Polysiloxan-Epoxy-Einschichtbeschichtungsstoff beschrieben, welcher in ersten praxisnahen Versuchen die nachfolgenden Zielsetzungen erfüllen soll: Verbesserung der Sicherheit in Straßentunneln durch Reduktion der Verschmutzung und Abdunkelung der Tunnelwände, Verbesserung der optischen Eigenschaften und gleichbleibende Reflexionseigenschaften.

Es wird weiter Reduktion der Unterhaltskosten durch Verbesserung der Reinigungseigenschaften, hohe Resistenz gegen Pneuabrieb, Russ und Tausalz, hohe Kratzfestigkeit und Verbesserung der hydrophoben Eigenschaften behauptet, wobei auch in verschiedenen Versuchsreihen die Produkte auf Betonflächen auf ihre Eigenschaften getestet wurden, und zwar in Vergleichstests mit marktgängigen Produkten. Insbesondere wurden dabei die Verschmutzungshaftung und die Reinigbarkeit untersucht. Dabei wurden folgende Schritte durchgeführt: Herstellung von Vergleichsmustern, Prüfung und Vergleich der mechanischen Eigenschaften, Prüfung und Vergleich der Verschmutzungsaufnahme, Prüfung und Vergleich der Reinigungseigenschaften. Dabei hat sich das Anmelderprodukt als geeignetstes Produkt durchgesetzt.

Dieses Produkt wird beschrieben als ist ein 2K-Polysiloxan-Epoxy-Einschichtbeschichtungsstoff mit folgender Produktbeschreibung: Er ist ein Sol-Gel basierender Beschichtungsstoff mit folgenden Eigenschaften: 2K-Beschichtung, Einschichtbeschichtungsstoff mit geringer Trockenschichtdicke, der leicht zu reinigende Oberflächen und mechanisch widerstandsfähige Einschichtbeschichtungen mit guter Haftung ergibt. Er soll bei niedrigen Temperaturen und insbesondere bei hohen Luftfeuchtigkeiten (> 90 %) härtbar sein, sehr gut auf verschiedenen Untergrundmaterialien (mineralische Untergründe, Metalle, Glas, Polymere...) haften und resistent gegenüber vielen organischen Lösungsmitteln sowie chromat- und bleifrei im Sinne der GefStoffV sein. Zu Anwendungsbereichen wird ausgeführt, dass er sehr gute Glanzhaltung und Witterungsbeständigkeit besitzt und eine gute Reinigungsfähigkeit der Oberfläche bietet. Er soll eine hohe Beständigkeit gegen saure und alkalische Angriffe und eine sehr gute Wasser- und Lösungsmittelbeständigkeit haben, wobei er mit zwei Komponenten im Farbton weiß lieferbar ist und weitere Farbtöne eine Anfrage erfordern. Er soll seidenglänzend aussehen, die Bindemittelbasis wird als Polysiloxan-Epoxy-Harz mit einem Festkörpergewicht von > 95 % t angegeben. Der praktische Verbrauch wird als abhängig von der Oberflächenrauhigkeit und vom Applikationsverfahren (ca. 0,25 bis 0,3 kg/m²) bezeichnet; es soll eine Temperaturbeständigkeit von -20 °C bis +150 °C gegeben sein, eine Lagerfähigkeit von mindestens 6 Monaten bei kühler, trockner Lagerung in verschlossenen Originalgebinden. Zur Verarbeitung wird angemerkt, dass sich die Oberflächenvorbereitung nach dem zu beschichtenden Material richtet und die Oberfläche auf jeden Fall schmutz- und fettfrei und tragfähig sein muss. Als Mischungsverhältnis wird ein Verhältnis von Stamm zu Härter mit 7,5 : 1 angegeben.

Die Verarbeitung soll durch Luftspritzen, Pinselauftrag, Rollen möglich sein, eine Verdünnung mit Alkoholen, Ketonen und Glykolethern. Zur Trocknung wird bemerkt, dass das Produkt bei Raumtemperatur härtet und dass es, wenn die Beschichtung staubtrocken ist, bei Temperaturen über 60°C eingebrannt werden kann. Die Topfzeit soll fünf Stunden (25°C) betragen, die Zeiten der Trocknung (25°C) fünf Stunden (staubtrocken), für Durchtrocknung (25°C) zehn Stunden. Das System wird als feuchtigkeitshärtend und dadurch auch bei hoher Luftfeuchtigkeit und Feuchtigkeit des Untergrundes applizierbar bezeichnet. Die Sollschichtdicke soll ca. 100 µm nach Härtung betragen, die in einem Arbeitsgang in dieser Schichtstärke aufgetragen wird. Die vorstehend angegebenen Werte sollen dabei wiederum Richtwerte sein.

Es wird darauf verwiesen, dass das Produkt die gängigen Normen erfüllt, welche im Tunnelbau gefordert sind. Insbesondere sollen auch bei der Wasserdampf-Diffusionsstromdichte nach SN EN ISO 7783-2 und bei der Kohlenstoffdioxid-Diffusionsstromdichte nach SN EN 1062-6 sehr gute Werte erzielt werden.

Es wurde im Herbst 2007 auch ein Feldversuch mit vier Applikationen im Zingel-Tunnel durchgeführt. Diese Versuchsflachen wurden in der Zwischenzeit mehrmals optisch begutachtet und bereits gereinigt. Die praktische Überprüfung von Haftung und Widerstandsfähigkeit, Reinigung und Unterhalt, von Umgebungs- und Anstrichbedingungen und die Ermittlung des praktischen Materialverbrauchs zeigen bereits eine hoch beanspruchbare und sehr leicht zu reinigende Oberfläche mit optimalen optischen Eigenschaften, trotz schwieriger Applikationsbedingungen (4 °C bis 6 °C bei Regenwetter).

Ein weiterer Farbtest im Juni 2009 wurde dann initialisiert, um zu überprüfen, ob neue Beschichtungsprodukte für die Anwendung in stark belasteten Straßentunneln geeignet sind. Dieser Farbtest war am Anmeldetag noch nicht abgeschlossen.

Es ist vor diesem technologischen Hintergrund wünschenswert, weitere Beschichtungen anzügeben, die für mineralische Untergründe geeignet sind; insbesondere soll für mineralische Untergründe eine Zweikomponenten-Schutzbeschichtung angegeben werden, die pigmentiert ist.

Es ist weiter wünschenswert, eine Substanz in Form einer pigmentierten Zweikomponenten-Schutzbeschichtung für beispielsweise mineralische Untergründe und deren Herstellungsverfahren anzugeben.

Die Aufgabe der vorliegenden Erfindung ist es, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Gemäß einem ersten wesentlichen Aspekt der Erfindung wird somit vorgeschlagen ein Zweikomponenten-Beschichtungsstoff mit plättchenartigen anorganischen Pigmenten und Füllstoffen, anorganischen und/oder organischen farbgebenden Pigmenten, Epoxy-Siloxan-Bindemittelkomponente und aminischem Härter, bei dem der Zweikomponenten-Schutzbeschichtungsstoff zwei vorerst getrennte Komponenten A und B enthält, wobei die Komponente A
(a1) x Gew.-% anorganische Pigmente umfasst,
   wobei x = 30 bis 70 ist,
(a2) 10 bis 50 Gew.-% mindestens eines Epoxy-Siloxans,
(a3) 0 bis 40 Gew.-% eines organischen Lösungsmittels umfasst,
und wobei die Komponente B
(b1) mindestens einen aminischen Härter und
(b2) gegebenenfalls mindestens ein organisches Lösungsmittel umfasst,
dadurch gekennzeichnet, dass die Additive hydrophobierende Additive umfassen, wobei in der einen Komponente organo-siliconbasierte Zusätze und in der anderen Komponente isocyanatbasierte Zusätze enthalten sind, und zwar die organo-siliconbasierten Additive in der Komponente B und die isocyanatbasierten Zusätze in der Komponente A.

Weiterhin wird vorgeschlagen ein Verfahren zur Herstellung eines erfindungsgemäßen Zweikomponenten-Beschichtungsstoffes, das folgende Schritte umfasst:
a) Vorlegen von 10 bis 50 Gew.-% von Epoxy-Siloxan
b) Homogenes Vermischen von x Gew.-% der plättchenartigen anorganischen Pigmente, wobei x = 5 bis 30 ist und y Gew.-% der farbgebenden organischen und/oder anorganischen Pigmente, wobei y = 10 bis 30 ist, mit dem Epoxy-Siloxan unter Bereitstellung der Komponente A und
c) Vorlegen von aminischem Härter und gegebenenfalls organischem Lösungsmittel, unter Bereitstellung der Komponente B, und
d) Vermengen der Komponenten A und B,
wobei in der Komponente B organo-silicönbasierte Zusätze und in der Komponente A isocyanatbasierte Zusätze enthalten sind.

Der erfindungsgemäße Zweikomponenten-Schutzbeschichtungsstoff enthält somit anorganische Pigmente und Füllstoffe, die plättchenartige Struktur besitzen. Diese plättchenförmigen Füllstoffe haben den Vorteil, den Diffusionsweg zu verlängern. Dies verlängert hier dem in die Beschichtung von außen eindringenden Kohlendioxid den Weg bis zum beschichteten Material, so dass die Füllstoffe nicht nur der Pigmentierung dienen, sondern sich auch durch diese Pigmente die Eigenschaften insbesondere dort ändern, wo das beschichtete Material kohlendioxidempfindlich ist und erhebliche Kohlendioxidbelastungen in der Umgebung auftreten. Der Beschichtungsstoff der vorliegenden Erfindung eignet sich somit besonders für Tunnel, insbesondere solche mit Betonwänden. Die Plättchen liegen im ausgehärteten Lack dann schichtweise vor.

Es hat sich gezeigt, dass bevorzugt wenigstens 5 und bevorzugt nicht mehr als 30 Gew.-% plättchenartige anorganische Pigmente oder Füllstoffe in der erfindungsgemäßen Zweikomponenten-Beschichtung enthalten sein sollten.

Wenn mehr als 30 Gew.-% verwendet werden, beeinträchtigt dies zwar den gewünschten Schutzeffekt nicht; es kann aber eventuell Probleme geben, wenn man einen eher dunklen Farbton einstellen möchte, da die Füllstoffe auch eine Weißwirkung besitzen. Weniger als 5 Gew.-% sind dagegen zur Erzielung einer besseren Schutzwirkung nicht mehr sicher unter allen Bedingungen als ausreichend anzusehen. Von den farbgebenden organischen und/oder anorganischen Pigmenten sind bevorzugt erfindungsgemäß wenigstens 10 bis 30 Gew.-% enthalten.

Dieser Bereich erlaubt es trotz bestehender Schwierigkeiten, einen gewünschten Farbton einzustellen. Um dunkle Farbtöne einzustellen, sind dabei die angegebenen 30 % Füllstoffe schon zu viel; daher ist oft ein Mittelweg zwischen möglichen Farbtönen und Schutzwirkung zu wählen.

Bevorzugt wird u. a. Talkum als plättchenförmiger Füllstoff verwendet. Als Talkum werden anorganische Mineralien aus der Familie der Schichtsilicate, auch Phyllosilicate, bezeichnet, die hauptsächlich aus Magnesiumsilicat bestehen und verschiedene Beimischungen wie Chlorit oder andere Begleitmineralien enthalten.

Auch Glimmer (Mica), also Schichtsilicate, in die große Kationen wie K⁺, Na⁺ oder Ca²⁺ eingebaut sind, kommen in Frage.

Bevorzugt wird Talkum mit einer Zusammensetzung von 35 bis 70 Gew.-% SiO₂, 5 bis 40 Ges.-% MgO, 5 bis 20 Ges.-% Al₂O₃ und 1 bis 5 Gew.-% Fe₂O₃, verwendet. Besonders bevorzugt wird lamellares Talkum mit einer Zusammensetzung von 40 bis 50 Gew.- % SiO₂, 25 bis 35 Ges.-% MgO, 7 bis 12 Gew.-% Al₂O₃, 1,5 bis 2,5 Gew.-% Fe₂O₃ und 1 bis 2 Gew.-% CaO verwendet.

Geeignete Talkum-Produkte werden beispielsweise vertrieben unter den Handelsnamen Luzenac^{®}, Mistron^{®}, French Velvet^{®}, Ultrapure Talc^{®}.

Als Füllstoffe werden weiter Calciumcarbonate bevorzugt. Einsetzbar sind Calciumcarbonate, die bevorzugt natürlich vorkommen oder synthetisch hergestellt wurden. Diese anorganischen Mineralien mit der chemischen Formel CaCO₃ haben einen alkalischen pH-Wert und eine geringe Ölabsorption, zumindest soweit natürliches Calciumcarbonat betroffen ist. Diese Eigenschaften machen Calciumcarbonate zu einem idealen Füllstoff für Grundierungen und Primer. Verwendbares Calciumcarbonat ist u. a. unter dem Handelsnamen *Omyacarb* erhältlich.

Als farbgebende Pigmente kommen praktisch alle technologisch einsetzbaren anorganischen und/oder organischen Pigmente in Frage.

Dies erlaubt es, zur Einstellung von definierten Farbtönen unterschiedliche Pigmenttypen zu kombinieren. Die farbgebenden Pigmente brauchen ausschließlich zur Farbgebung eingesetzt werden, was es erlaubt, auf typische Handelsware von verschiedenen Herstellern zurückzugreifen beziehungsweise auf vorgefertigte Pigmentmischungen mit voreingestellten Farbtönen.

Als anorganische Pigmente kommen u. a. Titandioxid, Ruß, Bismutpigmente, Eisencyanblau, Ultramarin, Cadmiumpigmente und Chromatpigmente (Chromgelb, Chromgrün und Molybdate) sowie weiterhin Eisenoxidpigmente, Chromoxid und Mischphasenpigmente (zum Beispiel Spinellpigmente, Hämatitpigmente, Inverse Spinellpigmente und Rutilderivate) in Frage.

Als bevorzugte organische Pigmente seien Azopigmente (Beta-Naphtholpigmente, Naphthol-AS Pigmente, Benzimidalolonpigmente) oder Polycyclische Pigmente (Phthalocyaninpigmente, Chinacridone, Diketopyrrolopyrrolpigmente, Dioxazine, Perylene, Isoindoline und Inthanthrone) offenbart.

Dass diese Materialien bei der Herstellung der Stammkomponente sehr gut dispergiert und gemahlen werden müssen, da fast keine Lösungsmittel enthalten sind und hohe Schwerkräfte aufgewandt werden müssen, sei erwähnt.

Die plättchenartigen anorganischen Pigmente und die Füllstoffe sowie die farbgebenden anorganischen und/oder organischen Pigmente werden der Epoxy-Siloxan-Komponente (Komponente A) oder
beiden Komponenten A und B zugegeben. Bei einer bevorzugten Variante werden die Pigmente jedoch ausschließlich der Epoxy-Siloxan-Komponente zugegeben.

Dies erleichtert die Einarbeitung der Pigmente.

Als Epoxy-Siloxane werden Polysiloxane mit funktionellen Epoxidgruppen bezeichnet, die wenigsten ein Polysiloxan mit funktionellen Epoxidgruppen umfassen, wobei das Polysiloxangerüst oder die Seitenkette des Polysiloxangerüsts bevorzugt OH-Gruppen oder Alkoxygruppen aufweisen mit einem Epoxy-Äquivalent von mindestens 200.

Besonders geeignete Präpolymere sind beispielsweise die unter den folgenden Handelsnamen erhältlichen Substanzen: Silikopon EF, Silikoftal ED und Tegomer Esi 2330 (Hersteller: Evonik Tego Chemie GmbH, 45127 Essen), D.E.R. 337 und D.E.R. 732 (Hersteller: Dow Epoxy Systems). Geeignet sind weiterhin Epoxy-Siloxane wie das Produkt Silres HP 1000 der Fa Wacker (Wacker Silicones Division, 3301 Sutton Road, Adrian, Michigan 49221-9397, USA), bei dem Phenylsilane mit Epoxysilanen oligomeriert sind oder Silres HP 2000.

Das verwendete Epoxy-Siloxan ist vorzugsweise bei Anwendungstemperaturen von ca. 0 bis 40 °C flüssig. Andernfalls kann der Zusatz von Lösungsmitteln erwogen werden, der jedoch bei dem erfindungsgemäßen Schutzbeschichtung per se so gering wie möglich gehalten werden soll.

Bei der erfindungsgemäßen Komponente A werden die Pigmente in dem vorzugsweise flüssigen Epoxy-Siloxan dispergiert, ohne dass weiteres Lösungsmittel zugesetzt werden muss. Um eine gute Dispergierung zu erreichen, wird flüssiges Harz vorgelegt und die Pigmente werden eingewogen und zum Harz gegeben. Die Pigmente werden mit einem Dissolver mit einer Rührscheibe unter hoher Scherwirkung eingerührt. Zu diesem Zeitpunkt kann es hilfreich sein, Dispergieradditive zuzugeben, die die Benetzung der Pigmente mit dem Harz verbessern.

Bevorzugt ist die Komponente A vollständig oder zumindest im wesentlichen lösungsmittelfrei. Der Lösungsmittelanteil beträgt bevorzugt insgesamt 0 bis maximal 20 Gew.-%, bevorzugt 0,5 bis 10 Gew.-%, weiter bevorzugt von 0,5 bis 5 Gew.-% und besonders bevorzugt von 0,3 bis 3 Gew.-%, bezogen auf das Gewicht des gesamten Schutzlackes beziehungsweise der gesamten Schutzbeschichtung.

Während theoretisch eine Vielzahl von Lösungsmitteln eingesetzt werden kann, sind Etheralkohole und hierbei insbesondere Butylglykol bevorzugt. Sehr gut geeignet sind auch Ester wie zum Beispiel Butylacetat. Alkohole wie Ethanol oder Isopropanol können zwar chemisch gesehen gut eingesetzt werden, haben allerdings in der Praxis den Nachteil, dass sie einen niedrigen Flammpunkt aufweisen.

Die Komponente B enthält im wesentlichen mindestens einen aminischen Härter oder Aminhärter. Hier können zwar prinzipiell alle bekannten aminischen Härter eingesetzt werden. Als bevorzugte aminische Härter seien aber Polyamine wie die besonders bevorzugten Amine Diethylentriamin, Triethylentetramin sowie cycloaliphatische Amine wie beispielsweise Isophorondiamin genannt.

Dass als Verschnitt im Stamm zusätzlich organische Epoxidharze mitzuverwenden sind, sei erwähnt. Das macht das Produkt zwar vorteilhaft billiger, aber die Eigenschaften werden schlechter (langsamere Härtung, weicher, schwächere Hydrophobie und damit schlechtere Reinigungsfähigkeit sowie schlechtere Diffusionseigenschaften wegen des geringeren Vernetzungsgrades) .

Besonders bevorzugt sind als aminische Härter Aminosilane wie zum Beispiel 3-Aminopropyltrimethoxysilan oder ähnliche Derivate von Aminosilanen mit einer oder mehreren Aminogruppen pro Silanmolekül. Der Vorteil der Verwendung von Aminosilanen ist vorliegend, dass die Alkoxidgruppen des Silanes mit den Alkoxidgruppen des Epoxy-Siloxan in Kondensa-tionsreaktionen mitvernetzen. Kommerziell erhältliche, erfindungsgemäß verwendbare Aminosilane sind beispielsweise von der Fa. Evonik unter dem Handelsnamen "Dynasylan^{®}" beziehungsweise von der Fa. Momentive unter dem Handelsnamen Silquest^{®}-Silane oder die von der Fa. Wacker produzierten GENOSIL^{®}-Silane. Beispiele hierfür sind beispielsweise Aminopropyltrimethoxysilan (Dynasylan AMMO; Silquest A-1110), Aminopropyltriethoxysilan (Dynasylan AMEO) und deren Mischungen.

Der Aminhärter wird in Mengen von 5 bis 25 Gew.-%, bevorzugt von 6 bis 20 Gew.-%, bezogen auf das Gewicht der gesamten Zweikomponenten-Schutzbeschichtung, eingesetzt. Dieser Gewichtsbereich ist vorteilhaft, denn wenn weniger Härter eingesetzt wird, ist die Aushärtung erheblich beeinträchtigt, was so weit gehen kann, dass gar keine Aushärtung der Beschichtung ("Fliegenleim") mehr erfolgt. Wenn mehr Härter verwendet wird, erfolgt zwar noch eine Aushärtung; allerdings ist zu erwarten, dass die resultierenden Produkteigenschaften dann nicht mehr vollständig wie gewünscht erreicht werden.

Bei einer weiteren bevorzugten Ausführungsform kann der Zweikomponenten-Beschichtüngsstoff zusätzlich weitere Additive wie Dispergierhilfsmittel, Netzmittel, Verlaufsmittel, Untergrundbenetzmittel, Füllstoffe und/oder weitere Bindemittel wie Reaktivverdünner enthalten.

Als. bevorzugte Dispergierhilfsmittel können per se übliche Lackadditive verwendet werden. Die Menge an verwendeten Additiven beträgt vorzugsweise 0 bis 5 Gew.-%, bezogen auf das Gewicht des gesamten Schutzlackes.

Als bevorzugte Füllstoffe können insbesondere plättchenförmige anorganische Füllstoffe wie Talkum, Glimmer, Kaolin, etc. verwendet werden. Die Menge an verwendetem Füllstoff beträgt vorzugsweise 3 bis 40 Gew.-%, weiter bevorzugt 3 bis 25 Gew.-%.

Talkum ist in der Lacktechnologie nicht nur per se bewährt, sondern auch preisgünstig. Die angegebenen Anteile haben bei empirischen Untersuchungen gute Verarbeitbarkeit ergeben und für den Tunnelbau vorteilhafte Diffusionseigenschaften.

Der 2K-Beschichtungsstoff kann insbesondere durch Streichen, Rollen oder durch Airless-Lackieren direkt auf den Untergrund aufgebracht werden. Die Schichtdicke der gesamten Beschichtung beträgt danach bevorzugt lediglich 60 bis 120µm, bevorzugt 80 bis 100 µm. Im Stand der Technik sind hingegen bei typischen mehrschichtigen Betonbeschichtungen deutlich höhere Schichtdicken üblich, was einen entsprechend erhöhten Materialverbrauch bedingt.

Die Erfindung sei im Folgenden nur beispielhaft erläutert, ohne sie zu beschränken.

### Noch nicht erfindungsgemäße Rezeptur (Zweikomponenten-Schutzbeschichtung)

### Komponente A:

Folgende Stoffe wurden in einem Ansatzbehälter nacheinander unter Rühren in einen Dissolver mit bis zu 2.000 U/min zugegeben:
40 g Epoxy-Siloxan wird vorgelegt. Der Festkörperanteil beträgt 97,5 bis 99,5 Gew.-%. Hierzu werden 0,5 g Dispergieradditiv sowie 1,5 g pyrogene Kieselsäure gegeben. Anschließend rührte man so lange, bis eine vollständig homogene Dispersion erhalten wurde. Dann werden nacheinander unter Rühren zugegeben:
20 g Titandioxid (Weißpigment)
10 g plättchenförmiges Talkum (funktionaler Füllstoff)
15 g Calciumcarbonat (funktionaler Füllstoff)
15 g Epoxy-Siloxan.

Anschließend wurden alle Komponenten noch 20 min bei 1.500 U/min verrührt.

### Komponente B:

Hier würden 13,8 g 3-Aminopropyltrimethoxysilan (Aminosilan) verwendet.

Während mit der vorstehend offenbarten Rezeptur bereits hervorragende Beschichtungen erzielbar sind, ist es möglich, weitere Verbesserungen zu erzielen.

Die Betonbeschichtung auf dem bisherigen Stand ist zwar nahezu lösungsmittelfrei, beinhaltet aber immer noch ca. 3 % organische Lösungsmittel. Diese Lösungsmittel werden dadurch "eingeschleppt", dass die Additive Lösungen sind. Wünschenswert wäre, den Lösungsmittelgehalt zu verringern beziehungsweise eine Zusammensetzung anzugeben, die lösungsmittelfreie Additive gut einsetzbar macht.

Nachstehend wird angegeben, welche Additivfunktionalitäten durch geeignete Mittel mit verringerter Belastung durch flüchtige Kohlenwasserstoffe realisierbar sind. Es sei erwähnt, dass sich als patentwürdig anzusehende Verbesserungen bereits ergeben, wenn eine einzelne oder mehrere einzelne Additivfunktionalitäten mit verringerter Belastung durch flüchtige Kohlenwasserstoffe wie nachstehend offenbart realisiert werden, ohne dass gleichzeitig auch alle der anderen der nachstehenden Additivfunktionalitäten mit verringerter Belastung an flüchtigen Kohlenwasserstoffen realisiert sein müssen. Es wird insoweit explizit darauf hingewiesen, dass die Verwendung einzelner Additivfunktionalitäten beziehungsweise zur Erzielung derselben verwendeter Additive für sich als - gegebenenfalls in Teilanmeldungen - beanspruchbar angesehen wird, wiewohl sich Vorteile zu ergeben vermögen, wenn mehrere oder alle Additivfunktionalitäten unter verringerter Belastung an flüchtigen Kohlenwasserstoffen realisiert werden.

Die Verringerung des Lösungsmittelgehalts auf Basis flüchtiger Kohlenwasserstoffe kann jedoch zu Problemen bei der Verarbeitung des einen hohen Feststoffgehalt aufweisenden Materials führen. Insbesondere bei Airless-Spritzen ist zum Beispiel die Viskosität zu hoch, um das Produkt noch gut zu verarbeiten.

Airless ist ein Spritzverfahren, bei dem ohne Luftzusatz mit hohem Pumpendruck viskose Beschichtungsstoffe verspritzt werden. Damit können sehr effektiv und schnell große Lackmengen verarbeitet werden. Die luftlose Auftragung ist gegenüber dem Rollenauftrag bevorzugt, da dieser mehr Zeit benötigt und der Lackverbrauch und die resultierende Schichtdicke bei Rollenauftrag höher sind.

Während sich prinzipiell durch Zugabe von organischen Lösungsmitteln wie zum Beispiel Butylglykol, Isopropanol oder Butylacetat die Viskosität so erniedrigen lässt, dass eine Verarbeitbarkeit gegeben ist, steigt dadurch der Lösungsmittelgehalt des Beschichtungsstoffes zu stark an und man verliert die Vorteile des Very-high-Solid-Materials wegen der hohen VOC-Werte, das heißt des zu hohen Gehalts von Volatile Organic Compounds, so dass die Belastung für die Verarbeiter und die Explosionsgefahr steigen. Solange die entsprechende Belastung für Verarbeiter keine zusätzlichen Schutzmaßnahmen erfordert und/oder keine Explosionsgefahr besteht und/oder keine besonderen Umweltschutzmaßnahmen aufgrund der Verwendung flüchtiger Kohlenwasserstoffe erforderlich sind, wird vorliegend der Gehalt an flüchtigen Kohlenwasserstoffen als "allenfalls gering" angesehen.

Um bei verringertem Gehalt an flüchtigen Kohlenwasserstoffen gleichwohl einen für luftloses Spritzen ausreichenden Verdünnungseffekt zu erzielen, werden nunmehr erfindungsgemäß sogenannte Reaktivverdünner eingesetzt werden. Als Reaktivverdünner kommen niedrigviskose Verbindungen in Betracht, die chemisch mit dem Grundmaterial zu reagieren vermögen.

Erfindungsgemäß bevorzugt sind Reaktivverdünner, die von der Polarität her sehr gut mischbar mit Epoxydharzen sind. Außerdem verfügen bevorzugte Reaktivverdünner über reaktive Epoxidgruppen, die in der Lage sind, mit den Aminen im Härter zu reagieren. Daher werden diese in das Polymergerüst mit eingebaut und gelangen nicht als VOC in die Umgebung, sondern verbleiben bei der Aushärtung und Vernetzung im Beschichtungsmaterial.

Besonders bevorzugt werden vorliegend niedrigviskose Glycidether von kurzkettigen aliphatischen Alkoholen oder Alkylphenolen als Reaktivverdünner eingesetzt. Typische Viskositäten liegen dabei im Bereich zwischen 5 bis 100 mPa s. Es werden typisch zur Gesamtformulierung nur geringe Mengen im Bereich von 1 bis 10 Gew.-% zugesetzt.

Beispiele hierfür sind monofunktionale Glycidether wie zum Beispiel p-tert.-Butyl-Phenylglycidether und C12-C14-Glycidether sowie di- oder polyfunktionale Glycidether-Reaktivverdünner wie 1,6-Hexandiol-giycidylether, 1,4-Butandioldiglycedether oder Glycerintri-Glycidether. Derartige Produkte werden zum Beispiel von der Firma UPPC unter der Bezeichnung Polypox R angeboten.

Zu beachten ist dabei, dass monofunktionelle Glycidether den Vernetzungsgrad der Beschichtung heruntersetzen, in Analogie zu Kettenabbruchsreaktionen bei Radikalsystemen. Je nach Zugabemenge an Reaktivverdünner wird daher erfindungsgemäß der Anteil der Aminkomponente im Härter entsprechend stöchiometrisch angepasst (erhöht) werden, indem eine Vernetzungsgradverringerung durch Reaktivverdünnereinsatz bestimmt oder abgeschätzt wird, insbesondere auf Basis einer Kettenabbruchsreaktion bei Radikalsystemen und eine Härteranpassung vorgenommen wird.

Durch die Verwendung der Reaktivverdünner in geringen Mengen kann auf die Verwendung von organischen Lösungsmitteln gänzlich verzichtet werden.

Es ist weiter möglich, auch zur Verbesserung der Hydrophobie der Beschichtung Additive mit verringertem VOC-Gehalt einzusetzen.

Eine typische Basisformulierung zeigt nach der Aushärtung einen starken hydrophoben Effekt und besitzt einen Kontaktwinkel von ca. 100 ° gegenüber Wasser.

Dieser Effekt führt zu einer starken Abweisung von Wasser und zu einer reduzierten Haftung von öligen Verunreinigungen an der ausgehärteten Oberfläche. Das bewirkt, dass Verschmutzungen schlechter anhaften und leicht zu entfernen sind. Im Einsatz bedeutet das, dass Reinigungsintervalle verlängert werden und die Reinigung selber kann mit geringem Aufwand erfolgen und unter Verzicht auf tensidische Reiniger. Dieser Effekt ist daher sehr wünschenswert. Um ihn zu erzielen, werden der Formulierung in der Regel Additive zugesetzt, die aufgrund ihrer hohen Grenzflächenaktivität zur Grenzfläche Beschichtung-Luft migrieren und dort nach der Aushärtung eine starke Hydrophobie und Oleophobie erzeugen.

Derartige Effekte sind bereits von Additiven bekannt, die auf Organo-Siliconen basieren und die eingesetzt werden zur Verbesserung der Reinigungsfähigkeit von Oberflächen, zum Beispiel auch als Anti-Graffiti-Mittel.

Herkömmlich werden diese aber nur bei Polyurethanen verwendet. Vorliegend wird nunmehr vorgeschlagen, ein Hydrophobie-Additiv in Epoxysystemen einzusetzen. Dazu wird gemäß der Erfindung der vorstehend offenbarten Rezeptur eine kleine Menge Isocyanat zugesetzt, das quasi als Ankergruppe zu dienen vermag. Besonders bevorzugt erfolgt die Zugabe im Fall dieser Erfindung zur Härterkomponente; dies ist vorteilhaft, weil dem Stamm zur Fixierung des Additivs ein Isocyanat zugesetzt wird. Indem das Additiv dem Härter zugegeben wird und das Isocyanat dem Stamm, erfolgt die gewünschte Reaktion erst beim Aushärten.

Eine bevorzugte Klasse von hydrophobierenden Additiven sind Lösungen von silikonmodifizierten OH-funktionellen Polyacrylaten oder polyethermodifizierten, hydroxyfunktionellen Polydimethylsiloxanen.

Diese Additive sind dafür bekannt, dass sie zur Hydrophobierung von Polyurethanen dienen. Sie bewirken dort nicht nur die Hydrophobierung, sondern werden wegen ihrer OH-Funktionalität und der Reaktion mit den Isocyanaten in fest chemisch eingebaut.

Typische verwendete Lösungsmittel sind zum Beispiel Methoxypropylacetat, wobei der Feststoffgehalt der Additivlösung im Bereich von 25 Gew.-% liegt. Die OH-Gehalte der acrylfunktionellen Verbindungen liegt bei ca. 30 (angegeben als mg KOH/g) .

Die Zugabemenge an Additivlösung liegt im Bereich von 3 bis 6 Gew.-%, bezogen auf die Mischung Stamm + Härter, der optimale Wert liegt im Bereich zwischen 1 bis 3 %. Werden mehr als 5 % eingesetzt, dann wird der Effekt nicht besser und der Überschuss wird bei der Benutzung vermutlich ausgewaschen. In der Praxis hat sich eine Menge von 3 % bewährt.

Kommerziell erhältliche Additivprodukte sind von der Fa. Byk-Chemie in Wesel erhältlich unter den Markennamen Byk-Silclean 3700 oder - 3720.

Damit die OH-funktionellen Additive im Polymerverbund an der Lackoberfläche fixiert werden, werden der oder den Stammkomponenten erfindungsgemäß reaktive Polyisocyanate zugesetzt, die beim Aushärtevorgang der Beschichtung reaktiv an die OH-Komponente andockt und so das Additiv an der Oberfläche fixiert. Hierzu wird zur Stammkomponente Polyisocyanatlösung im Bereich von 1 bis 3 Gew.-% eingesetzt.

Ohne die erfindungsgemäße Fixierung dieser Additive in der Lackmatrix wird das Additiv mit der Zeit ausgewaschen und der hydrophobe Effekt auf Dauer deutlich reduziert.

Als Polyisocyanate sind oligomere Isocyanate einsetzbar, die typischerweise zur Herstellung von 2K-Polyurethanen eingesetzt werden.

Dem als erfinderisch angesehenen Gedanken, Epoxysysteme mit geringen Mengen an Isocyanaten zu "verschneiden", wird für sich besondere Bedeutung beigemessen.

Erwähnt sei, dass Addukte von TDI (Toluoldiisocyanat), HDI (Hexamethylendiisocyanat) und IPDI (Isophorondiisocyanat) für die Erfindung bevorzugt verwendbar sind. Weiterhin können auch reaktivere Mischungen von Isocyanaten verwendet werden wie zum Beispiel Isocyanurat-Trimere aus HDI, Biuret aus HDI oder. Allophanat aus HDI und Ethylhexanol.

Da die sehr reaktiven aromatischen Isocyanate nicht UVbeständig sind, wird bei der vorliegenden Erfindung im übrigen besonders bevorzugt auf aliphatische Polyisocyanate zurückgegriffen, die zum Beispiel auf IPDI oder HDI basieren. Typische kommerzielle Produkte sind zum Beispiel von Herstellern wie Bayer unter dem Handelsnamen Desmodur oder von der Fa. Rhodia als Tolonate oder von der BASF unter dem Namen Basonat erhältlich.

Zur Verarbeitung werden Stamm und Härter vermischt und dann appliziert. Die Verarbeitung kann innerhalb von zum Beispiel maximal vier Stunden erfolgen, bevor das Produkt geliert (Topfzeit). Nach ca. vier Stunden ist die Lackoberfläche staubtrocken, nach zwölf Stunden durchgetrocknet und belastbar.

Es ist des Weiteren und/oder zusätzlich möglich, auch bei jenen Additiven eine zumindest weitgehende Verringerung der flüchtigen organischen Kohlenwasserstoffe zu erreichen, die zur Verbesserung der Dispersion eingesetzt werden.

Netz - bzw. Dispergieradditive dienen dazu, die Pigmentbenetzung und -stabilisierung zu verbessern; sie verhindern bzw. vermindern so das Auf- und Ausschwimmen sowie das Absetzen von Pigmenten. Erfindungsgemäß werden nun bevorzugt als Dispergieradditive Fettsäurederivate verwendet; als lösemittelfreie Fettsäurederivate seien beispielhaft genannt das unter dem Handelsnamen Tego Dispers 652 erhältliche Additiv. Als geeignete Additive offenbart seien weiterhin niedermolekulare ungesättigte Polycarbonsäurepolymere; ein Beispiel für ein solches Produkt mit einem Wirkstoffgehalt von 99 % ist Byk - P 105.

Ebenfalls geeignet sind hochpolymere Polyurethan-Polymere. Als lösemittelfreies hochpolymeres Polyurethan-Polymer mit ausgezeichneter benetzender und deflokkulierender Wirkung sei beispielhaft Borchi Gen 0755 genannt.

Es ist des Weiteren und/oder zusätzlich möglich, auch bei jenen Additiven eine zumindest weitgehende Verringerung der flüchtigen organischen Kohlenwasserstoffe zu erreichen, die als Entschäumer und/oder als Entlüfter verwendet werden.

Derartige Additive werden eingesetzt, um unerwünschte Einschlüsse von Luft oder Lösemitteln zu entfernen. Die Wirkmechanismen sind im Stand der Technik weitläufig beschrieben; die Produkte basieren auf Lösungen von Dimethylpolysiloxanen oder organisch modifizierten Polysiloxanen. Silikonfrei Additive auf Basis von organischen Polymeren sind auch bekannt, werden aber seltener eingesetzt.

Als bevorzugt verwendetes, kommerziell erhältliches Produkte auf Basis eines organisch modifizierten Polysiloxanes sei zum Beispiel Tego Airex 950 oder Baysilone Lackadditiv 3468 genannt, die 100 % des Wirkstoffes enthalten und frei von flüchtigen organischen Lösemitteln sind. Als silikonfreie Alternativen ohne Lösemittel seine schaumzerstörende organische Polymere wie zum Beispiel das Produkt Byk A 535 oder Borchi Gol E2 von OMG Borchers genannt.

Auch hinsichtlich Additiven, die die Eigenschaften der Oberfläche verbessern und die Oberflächenspannung der Beschichtung erniedrigen, ist es möglich, solche zu verwenden, die sich nicht durch einen hohen Gehalt an_{.} flüchtigen organischen Kohlenwasserstoffen negativ auswirken. Typischerweise sind dies Silikonadditive oder organisch modifizierte Silikon-(Co-)Polymere. Als Beispiele seien zum Beispiel Borchi Gol LA 2 oder Baysilone Lackadditiv 3468 mit jeweils 100 % Wirkstoffgehalt genannt.^{A}

Es sei erwähnt, dass die offenbarte Schutzbeschichtung nicht nur für die Beschichtung von (Beton-)Tunnelröhren Vorteile bietet, sondern vielfältig einsetzbar ist, zum Beispiel für Betonbarrieren im Straßenverkehr, Funktions- und Wohnbauten usw., insbesondere auch unter stark UV-belasteten Bedingungen wie in südlichen Ländern usw.

## Patentansprüche

1. Zweikomponenten-Schutzbeschichtung für mineralischen Untergrund, mit
plättchenartigen, anorganischen Pigmenten, Füllstoffen, Additiven,
Epoxy-Siloxan-Bindemittelkomponente und aminischem Härter, die zunächst aus getrennten Komponenten A und B besteht,
wobei
Komponente A
(a1) x Gew.-% anorganische Pigmente umfasst,
wobei x = 30 bis 70 ist,
(a2) 10 bis 50 Gew.-% mindestens eines Epoxy-Siloxans,
(a3) 0 bis 40 Gew.-% eines organischen Lösemittels
umfasst
und
Komponente B
(b1)mindestens einen aminischen Härter und
(b2) gegebenenfalls mindestens ein organisches Lösungsmittel
umfasst,
**dadurch gekennzeichnet, dass** die Additive hydrophobierende Additive umfassen, wobei
in der einen Komponente organo-siliconbasierte
und
in der anderen Komponente isocyanatbasierte Zusätze enthalten sind, und zwar
die organo-siliconbasierten Additive in der Komponente B und die isocyanatbasierten Zusätze in der Komponente A.

2. Zweikomponenten-Schutzbeschichtung nach dem vorhergehenden Anspruch, **dadurch gekennzeichnet, dass** die organo-siliconbasierten Additive ausgewählt sind aus Lösungen von silikonmodifizierten OH-funktionellen Polyacrylaten oder poly-ethermodifizierten hydroxyfunktionellen Polydimethylsiloxanen.

3. Zweikomponenten-Schutzbeschichtung nach dem vorhergehenden Anspruch, **dadurch gekennzeichnet, dass** die Isocyanat-Additive aliphatische Polyisocyanate sind.

4. Zweikomponenten-Schutzbeschichtung nach einem der vorhergehenden Ansprüche, **dadurch gekennzeichnet, dass** auf einem von HDI, IPDI oder von TDI basierte Adukte verwendet werden.

5. Zweikomponenten-Schutzbeschichtung nach einem der vorhergehenden Ansprüche, **dadurch gekennzeichnet, dass** der Lösungsmittelanteil der Komponente A 0 bis 20 %, bevorzugt 0,5-10 %, insbesondere 0,5-5 %, besonders bevorzugt 0,3-3 %, bezogen auf das Gesamtschutzlackgewicht, beträgt.

6. Zweikomponenten-Schutzbeschichtung nach einem der vorhergehenden Ansprüche,
**dadurch gekennzeichnet, dass**
die Epoxybindemittel-Komponente ein Epoxy-Siloxan ist, wobei dies Polysiloxane mit funktionellen Epoxidgruppen sind und das Polysiloxangerüst oder die Seitenkette des Polysiloxangerüsts OH-Gruppen oder Alkoxygruppen aufweisen, bevorzugt mit einem Epoxy-Äquivalent von mindestens 200.

7. Zweikomponenten-Schutzbeschichtung nach einem der vorhergehenden Ansprüche,
**dadurch gekennzeichnet, dass**
der aminische Härter ein oder mehrere Aminosilane (Alkoxysilane mit einer oder mehreren Amingruppen an einer oder mehreren Alkyseitenkette) enthält.

8. Zweikomponenten-Schutzbeschichtung nach einem der vorhergehenden Ansprüche,
**dadurch gekennzeichnet, dass**
der aminische Härter ein oder mehrere organische Amine enthält.

9. Zweikomponenten-Schutzbeschichtung nach einem der vorhergehenden Ansprüche,
**dadurch gekennzeichnet, dass**
alle oder ein Teil der Pigmente plättchenartig, anorganisch und/oder oxidisch sind.

10. Zweikomponenten-Schutzbeschichtung nach einem der vorhergehenden Ansprüche,
**dadurch gekennzeichnet, dass**
die Zweikomponenten-Schutzbeschichtung zumindest ein Additiv aus der Gruppe Dispergierhilfsmittel, Netzmittel, Verlaufsmittel, Untergrundbenetzmittel,
bevorzugt bis zu insgesamt 15 Gew.-%,
insbesondere zwischen 2 bis 10 Gew.-%,
jeweils bezogen auf das Gewicht der gesamten Zweikomponenten-Schutzbeschichtung, enthält.

11. Beton-Schutzbeschichtung nach einem der vorhergehenden Ansprüche.

12. Verwendung der Beton-Schutzbeschichtung nach dem vorhergehenden Anspruch für Tunnelwände aus Beton.

13. Verfahren zur Herstellung einer Zweikomponenten-Schutzbeschichtung nach einem der Ansprüche 1 bis 10, **dadurch gekennzeichnet, dass** es folgende Schritte umfasst:
a) Vorlegen von 10 bis 50 Gew.-% von Epoxy-Siloxan,
b) homogenes Vermischen von 30 bis 70 Gew.-% der plättchenartigen anorganischen Pigmente, mit 10 bis 30 Gew.-% der anorganischen und/oder organischen farbgebenden Pigmente mit dem Epoxy-Siloxan unter Bereitstellung der Komponente A und
c) Vermischen von 2 bis 15 Gew.-% an aminischem Härter, unter Bereitstellung der Komponente B,
d) Vermengen der Komponenten A und B, wobei in der Komponente B organo-siliconbasierte Zusätze und in der Komponente A isocyanatbasierte Zusätze enthalten sind.

## Claims

1. Two-component protective coating for a mineral substrate,
comprising
plateletlike inorganic pigments, fillers, additives, epoxy-siloxane binder component and aminic hardener, the coating consisting initially of separate components A and B,
where
component A comprises
(a1) x wt.% of inorganic pigments,
where x = 30 to 70,
(a2) 10 to 50 wt.% of at least one epoxy-siloxane,
(a3) 0 to 40 wt.% of an organic solvent
and
component B comprises
(b1) at least one aminic hardener and
(b2) optionally at least one organic solvent, **characterized in that** the additives comprise hydrophobizing additives, where
one component comprises organosilicon-based adjuvants and
the other component comprises isocyanate-based adjuvants, and specifically
component B comprises the organosilicon-based additives and component A comprises the isocyanate-based adjuvants.

2. Two-component protective coating according to the preceding claim, **characterized in that** the organosilicon-based additives are selected from solutions of siliconemodified OH-functional polyacrylates or polyethermodified hydroxy-functional polydimethylsiloxanes.

3. Two-component protective coating according to the preceding claim, **characterized in that** the isocyanate additives are aliphatic polyisocyanates.

4. Two-component protective coating according to any of the preceding claims, **characterized in that** adducts based on one of HDI, IDPI or TDI are used.

5. Two-component protective coating according to any of the preceding claims, **characterized in that** the solvent fraction of component A is 0 to 20%, preferably 0.5-10%, more particularly 0.5-5%, very preferably 0.3-3%, based on the total protective coating material weight.

6. Two-component protective coating according to any of the preceding claims,
**characterized in that**
the epoxy binder component is an epoxy-siloxane, these being polysiloxanes having functional epoxide groups, and the polysiloxane framework or the side chain of the polysiloxane framework has OH groups or alkoxy groups, preferably with an epoxy equivalent of at least 200.

7. Two-component protective coating according to any of the preceding claims,
**characterized in that**
the aminic hardener comprises one or more aminosilanes (alkoxysilanes having one or more amine groups on one or more alkyl side chains).

8. Two-component protective coating according to any of the preceding claims,
**characterized in that**
the aminic hardener comprises one or more organic amines.

9. Two-component protective coating according to any of the preceding claims,
**characterized in that**
all or some of the pigments are plateletlike, inorganic and/or oxidic.

10. Two-component protective coating according to any of the preceding claims,
**characterized in that**
the two-component protective coating comprises at least one additive from the group of dispersing assistants, wetting agents, flow control agents and substrate-wetting agents,
preferably up to a total of 15 wt.%,
more particularly between 2 to 10 wt.%,
based in each case on the weight of the overall two-component protective coating.

11. Concrete-protective coating according to any of the preceding claims.

12. Use of the concrete-protective coating according to the preceding claim for tunnel walls of concrete.

13. Method for producing a two-component protective coating according to any of Claims 1 to 10,
**characterized in that** it comprises the following steps:
a) introducing 10 to 50 wt.% of epoxy-siloxane,
b) homogeneously mixing 30 to 70 wt.% of the plateletlike inorganic pigments with 10 to 30 wt.% of the inorganic and/or organic, colour-imparting pigments with the epoxy-siloxane, to provide component A, and
c) mixing 2 to 15 wt.% of aminic hardener, to provide component B, and
d) combining components A and B, with component B comprising organosilicon-based adjuvants and component A comprising isocyanate-based adjuvants.

## Revendications

1. Revêtement protecteur à deux composants pour un substrat minéral,
comprenant
des pigments inorganiques lamellaires, des charges, des additifs,
un composant liant de type époxy-siloxane et un agent de durcissement aminique,
qui tout d'abord est constitué de composants séparés A et B,
le composant A comprenant
(a1) x % en poids de pigments inorganiques,
x = 30 à 70,
(a2) 10 à 50 % en poids d'au moins un époxy-siloxane,
(a3) 0 à 40 % en poids d'un solvant organique
et
le composant B comprenant
(b1) au moins un agent de durcissement aminique et
(b2) éventuellement au moins un solvant organique, **caractérisé en ce que** les additifs comprennent des additifs hydrophobisants,
des adjuvants à base d'organo-silicone étant contenus dans un composant
et
des adjuvants à base d'isocyanate étant contenus dans l'autre composant, et notamment
les additifs à base d'organo-silicone étant contenus dans le composant B et les adjuvants à base d'isocyanate étant contenus dans le composant A.

2. Revêtement protecteur à deux composants selon la revendication précédente, **caractérisé en ce que** les additifs à base d'organo-silicone sont choisis parmi des solutions de polyacrylates fonctionnalisés par OH modifiés par une silicone et des polydiméthylsiloxanes fonctionnalisés par hydroxy modifiés par un polyéther.

3. Revêtement protecteur à deux composants selon la revendication précédente, **caractérisé en ce que** les additifs à isocyanate sont des polyisocyanates aliphatiques.

4. Revêtement protecteur à deux composants selon l'une quelconque des revendications précédentes, **caractérisé en ce que** des adduits à base d'un quelconque parmi HDI, IPDI et TDI sont utilisés.

5. Revêtement protecteur à deux composants selon l'une quelconque des revendications précédentes, **caractérisé en ce que** la proportion de solvant du composant A est de 0 à 20 %, préférablement 0,5 à 10 %, en particulier 0,5 à 5 %, particulièrement préférablement 0,3 à 3 %, par rapport au poids total du vernis de protection.

6. Revêtement protecteur à deux composants selon l'une quelconque des revendications précédentes, **caractérisé en ce que** le composant liant de type époxy est un époxy-siloxane, celui-ci étant des polysiloxanes comportant des groupes époxyde fonctionnels et le squelette de polysiloxane ou les chaînes latérales du squelette de polysiloxane présentant des groupes OH ou des groupes alcoxy, préférablement comportant un équivalent d'époxy d'au moins 200.

7. Revêtement protecteur à deux composants selon l'une quelconque des revendications précédentes, **caractérisé en ce que** l'agent de durcissement aminique contient un ou plusieurs aminosilanes (des alcoxysilanes dotés d'un ou plusieurs groupes amine au niveau d'une ou plusieurs chaînes latérales alkyle).

8. Revêtement protecteur à deux composants selon l'une quelconque des revendications précédentes, **caractérisé en ce que** l'agent de durcissement aminique contient une ou plusieurs amines organiques.

9. Revêtement protecteur à deux composants selon l'une quelconque des revendications précédentes, **caractérisé en ce que** tout ou une partie des pigments sont lamellaires, inorganiques et/ou oxydiques.

10. Revêtement protecteur à deux composants selon l'une quelconque des revendications précédentes, **caractérisé en ce que** le revêtement protecteur à deux composants contient au moins un additif du groupe composé par des auxiliaires de dispersion, des agents mouillants, des agents d'écoulement, des agents mouillants de substrat, préférablement jusqu'à 15 % en poids au total,
en particulier entre 2 et 10 % en poids,
à chaque fois par rapport au poids du revêtement protecteur à deux composants total.

11. Revêtement protecteur de béton selon l'une quelconque des revendications précédentes.

12. Utilisation du revêtement protecteur de béton selon la revendication précédente pour des parois de tunnel en béton.

13. Procédé pour la préparation d'un revêtement protecteur à deux composants selon l'une quelconque des revendications 1 à 10, **caractérisé en ce qu'**il comprend les étapes suivantes :
a) chargement de 10 à 50 % en poids d'époxy-siloxane,
b) mélange homogène de 30 à 70 % en poids des pigments inorganiques lamellaires, avec 10 à 30 % en poids des pigments colorants inorganiques et/ou organiques avec l'époxy-siloxane avec obtention du composant A et
c) mélange de 2 à 15 % en poids d'un agent de durcissement aminique, avec obtention du composant B,
d) mélangeage des composants A et B, des adjuvants à base d'organo-silicone étant contenus dans le composant B et des adjuvants à base d'isocyanate étant contenus dans le composant A.
